# EUROPÄISCHE PATENTSCHRIFT

(11) **EP 3 594 141 B1**
(45) Veröffentlichungstag und Bekanntmachung des Hinweises auf die Patenterteilung: **21.12.2022**
(21) Anmeldenummer: 19159275.7
(22) Anmeldetag: 26.02.2019
(51) Int. Cl.: B65C 9/04, B65G 54/02, B65C 3/14

(54) **BEHANDLUNGSMASCHINE FÜR BEHÄLTER**
TREATMENT MACHINE FOR CONTAINER
MACHINE DE TRAITEMENT POUR RÉCIPIENTS

(30) Priorität: 10.07.2018 DE 102018211343
(43) Veröffentlichungstag der Anmeldung: 15.01.2020
(73) Patentinhaber: Krones AG, 93073 Neutraubling (DE)
(72) Erfinder: Gertlowski, Georg, 93073 Neutraubling (DE); Richter, Stefan, 93073 Neutraubling (DE)
(74) Vertreter: Grünecker Patent- und Rechtsanwälte PartG mbB

(56) Entgegenhaltungen:
- EP-A1- 0 148 371
- WO-A1-2017/103813
- WO-A1-2019/159117
- US-A- 4 239 569
- US-A1- 2003 230 941

## Beschreibung

Die Erfindung betrifft eine Behandlungsmaschine für Behälter gemäß dem Oberbegriff des Anspruchs 1.

Aus der US 4,239,569 A ist eine Behandlungsmaschine für Behälter bekannt, umfassend wenigstens ein Behandlungsaggregat sowie ein oberes und ein unteres Förderband, an denen Einspannmittel zum vertikalen Einspannen der Behälter umlaufend ausgebildet sind. Die Förderbänder bilden untere und obere Umlaufbahnen für die Einspannmittel aus und umfassen Wendeabschnitte mit im Wesentlichen vertikaler Bahnkrümmung.

Die nachveröffentlichte WO 2019/159117 A1 offenbart eine Behandlungsmaschine für Behälter, umfassend wenigstens ein Behandlungsaggregat und ein Linearmotorsystem mit Langstatoren und davon individuell angetriebenen Transportfahrzeugen. Die Langstatoren sind in Form einer unteren und einer oberen Umlaufbahn für die Transportfahrzeugen mit einander am Behandlungsaggregat zugewandten Transportabschnitten angeordnet. Die Transportfahrzeuge sind paarweise zum vertikalen Einspannen der Behälter ausgebildet, wobei die untere und obere Umlaufbahn Wendeabschnitte mit im Wesentlichen vertikaler Bahnkrümmung umfassen.

Eine Behandlungsmaschine gemäß dem Oberbegriff des Anspruchs 1 ist aus der WO 2017/103813 A1 bekannt. Derartige Behandlungsmaschinen auf der Grundlage von Linearmotorsystemen mit im Bereich von Behandlungsaggregaten geradlinigen Transportabschnitten haben im Vergleich zu karussellförmigen Behandlungsmaschinen Vorteile hinsichtlich einer flexibleren Anpassung an unterschiedliche Maschinenkapazitäten und Maschinenabmessungen sowie hinsichtlich der variablen Transportgeschwindigkeiten an einzelnen Behandlungsaggregaten. Außerdem müsse nur vergleichsweise geringe Massen beim Transport der Behälter entlang von Behandlungsaggregaten bewegt werden.

Nachteilig bei der Behandlungsmaschine gemäß der WO 2017/103813 A1 ist jedoch, dass für den Behältereinlauf und Behälterauslauf herkömmliche Einlaufsterne und Auslaufsterne benötigt werden, und dass ein Antrieb von Drehtellern für die zu behandelnden Behälter auf den Transportfahrzeuge des beschriebenen Linearmotorsystems vergleichsweise aufwendig ist und/oder mittels individuell angetriebener Begleitfahrzeuge erfolgt, die vergleichsweise viel Platz benötigen und somit nur vergleichsweise große Transportabstände zwischen den Behältern möglich sind. Dies lässt sich bei einer vorgegebenen Maschinenleistung nur dadurch kompensieren, dass die Behälter mit vergleichsweise hoher Transportgeschwindigkeit an den Behandlungsaggregaten entlanglaufen. Dadurch ergeben sich jedoch anderweitige technische Probleme, beispielsweise hinsichtlich der Behandlungsqualität an den einzelnen Aggregaten.

Zudem wäre es wünschenswert, den Behältereinlauf und den Behälterauslauf hinsichtlich der Transportteilung der Behälter und der Berücksichtigung von Transportlücken im Behälterstrom flexibler zu gestalten. Zwar sind zu diesem Zweck Transfersterne mit Teilungsverzug prinzipiell bekannt. Diese sind jedoch mechanisch aufwändig und ermöglichen nur eine vergleichsweise stark eingeschränkte Anpassung vom Transportteilungen.

Es besteht daher Bedarf für eine Behandlungsmaschine, bei der zumindest eines der oben genannten Probleme beseitigt oder zumindest abgemildert werden kann.

Die gestellte Aufgabe wird mit einer Behandlungsmaschine für Behälter gemäß Anspruch 1 gelöst. Demnach umfasst die Behandlungsmaschine wenigstens ein Behandlungsaggregat und ein Linearmotorsystem mit Langstatoren und davon individuell angetriebenen Transportfahrzeugen. Die Langstatoren sind in Form einer oberen und einer unteren Umlaufbahn für die Transportfahrzeuge im Bereich des Behandlungsaggregats miteinander zugewandten und insbesondere geradlinigen Transportabschnitten angeordnet. Ferner sind die Transportfahrzeuge paarweise zum vertikalen Einspannen der Behälter ausgebildet. Die Transportfahrzeuge der unteren Umlaufbahn umfassen Drehteller zur Aufnahme der Behälter und die Transportfahrzeuge der oberen Umlaufbahn Zentrierköpfe zum axialen Einspannen der Behälter auf den Drehtellern. Damit lassen sich die Behälter zwischen paarweise übereinander laufenden Transportfahrzeuge in einer definierten Transportposition einspannen und in eine gewünschte Drehlage für die anschließende Behandlung stellen.

Erfindungsgemäß umfassen die obere und die untere Umlaufbahn Wendeabschnitte mit im Wesentlichen vertikaler Bahnkrümmung. Im Gegensatz zu bekannten Wendeabschnitten mit horizontaler Bahnkrümmung wird dadurch ein geradliniger Behältereinlauf und/oder Behälterauslauf begünstigt, insbesondere in gedachter Verlängerung der geradlinigen Transportabschnitte des Linearmotorsystems. An das Linearmotorsystem direkt anschließende Einlaufsterne, Auslaufsterne oder dergleichen sind daher entbehrlich.

Ferner umfasst die Behandlungsmaschine eine mechanische Kurvensteuerung zum Absenken der Zentrierköpfe auf die einlaufenden Behälter und zum Anheben der Zentrierköpfe von den auslaufenden Behältern. Die Kurvensteuerung umfasst dann beispielsweise eine stationär im Bereich des Behältereinlaufs und/oder Behälterauslaufs ausgebildete Steuerkurve und damit zusammenwirkenden Steuerrollen, deren Lager mit den Zentrierköpfen fest verbunden sind.

Die Behandlungsmaschine arbeitet somit vorzugsweise als Geradläufermaschine.

Dies wird insbesondere auch dadurch ermöglicht, dass die Wendeabschnitte der oberen und unteren Umlaufbahn am Behältereinlauf in Transportrichtung gesehen aufeinander zu und am Behälterauslauf voneinander weglaufen. Das heißt, zwischen der oberen und unteren Umlaufbahn können am Behältereinlauf und/oder Behälterauslauf anschließende Lineartransporteure mit vergleichsweise geringem Aufwand angeordnet werden.

Zudem kann jedem einzelnen Behälter ein eigenes Paar aus einem oberen und einem unteren Transportfahrzeug zugeordnet werden, so dass für jeden Behälter prinzipiell individuell einstellbare Transportbewegungen möglich sind. Somit können die Behälter, anders als an Einlaufsternen, mit unterschiedlichen Transportabständen und Transportgeschwindigkeiten einlaufen.

Die Wendeabschnitte sind zwischen den Transportabschnitten und Rückführabschnitten angeordnet. Die Rückführabschnitte dienen dazu, nicht mit Behältern bestückte Transportfahrzeuge vom Behälterauslauf zum Behältereinlauf zurückzuführen. Die Transportfahrzeuge könnten in den Rückführabschnitten prinzipiell auch eingeschleust / ausgeschleust werden. Vorzugsweise sind an den Wendeabschnitten ein Behältereinlauf und ein Behälterauslauf angeordnet, also einerseits zwischen den einlaufseitig übereinanderliegenden Wendeabschnitten der oberen und unteren Umlaufbahn und andererseits zwischen den auslaufseitig übereinanderliegenden Wendeabschnitten der oberen und unteren Umlaufbahn.

Die Wendeabschnitte vereinfachen den Behältereinlauf und/oder den Behälterauslauf, da an den Transportfahrzeugen der oberen Umlaufbahn befestigte Halteelemente, wie Zentrierköpfe, beim Wenden der Transportfahrzeuge von oben auf die einzuspannenden Behälter zulaufen. Somit ist zum Einspannen nur noch ein vergleichsweise kleiner Hub der Zentrierköpfe bezüglich ihrer Transportfahrzeuge nötig.

Dies gilt ähnlich auch für an den Transportfahrzeugen der unteren Umlaufbahn befestigte Halteelemente, wie Drehteller, die beim Wenden der Transportfahrzeuge von unten auf die einzuspannenden Behälter zulaufen.

Vorzugsweise umfasst das Linearmotorsystem eine Steuerung, mit der Transportgeschwindigkeiten paarweise übereinander laufender Transportfahrzeuge synchron variiert werden können. Dadurch lässt sich die Transportgeschwindigkeit der eingespannten Behälter entlang des Transportabschnitts gezielt an Behandlungsschritte gegebenenfalls auch mehrerer Behandlungsaggregate anpassen.

Außerdem können die Behälter innerhalb der Behandlungsmaschine auf eine für die Behandlung geeignete Transportteilung gebracht werden, insbesondere durch paarweise individuell angepasste Transportgeschwindigkeiten.

Vorzugsweise können die Transportgeschwindigkeiten am Behältereinlauf, am Behälterauslauf und am Behandlungsaggregat unabhängig voneinander eingestellt werden. Somit kann die Transportteilung am Behandlungsaggregat unabhängig von einer stromaufwärts des Behandlungsaggregats vorgegebene Transportteilung und/oder auch bei unregelmäßigen Transportabständen einlaufender Behälter gezielt eingestellt werden. Optional kann der Behälterauslauf an eine stromabwärts benötigte Transportteilung angepasst werden.

Somit ermöglicht das Linearmotorsystem in der Behandlungsmaschine selbst eine flexible Anpassung von Transportteilungen, und zwar einlaufseitig, auslaufseitig und/oder behandlungsseitig.

Vorzugsweise umfasst die obere Umlaufbahn am Behältereinlauf einen Aufnahmeabschnitt und/oder am Behälterauslauf einen Abgabeabschnitt mit einem Verlauf schräg nach oben zum anschließenden Wendeabschnitt hin, und/oder die untere Umlaufbahn umfasst am Behältereinlauf einen Aufnahmeabschnitt und/oder am Behälterauslauf einen Abgabeabschnitt mit einem Verlauf schräg nach unten zum anschließenden Wendeabschnitt hin.

Dies ermöglicht einen im Wesentlichen durchgehend horizontalen Einlauf und Auslauf der Behälter, während die an den Transportfahrzeugen vorhandenen Halteelemente zur Aufnahme der Behälter schonend gegen diese und/oder zur Abgabe der Behälter wieder von diesen weg gefahren werden. Dies verringert zudem den technischen Aufwand für zusätzliche Hubvorrichtungen zum Absenken / Anheben von Zentrierköpfen bezüglich der Behälter.

Vorzugsweise umfasst die Behandlungsmaschine ferner eingangsseitig und/oder ausgangsseitig mit den Wendeabschnitten in Transportrichtung überlappende Transportriemen zum seitlichen Halten der Behälter. Die Transportriemen sind dann jeweils beidseitig der Behälter angeordnet und halten die Behälter an ihren Seitenwänden so lange, bis die Behälter auf den Transportfahrzeugen der unteren Umlaufbahn stehen und von den Transportfahrzeugen der oberen Umlaufbahn zumindest gegen Umfallen gesichert sind. Die Transportriemen können vergleichsweise einfach und platzsparend zwischen der oberen und unteren Umlaufbahn der Transportfahrzeuge angeordnet werden.

Vorzugsweise verlaufen die Transportriemen dann in linearer Fortsetzung der jeweils anschließenden Transportabschnitte. Dadurch ergibt sich eine durchgehend lineare Transportbewegung der Behälter vom Behältereinlauf bis zur Behandlung am jeweiligen Behandlungsaggregat und/oder bis zum Behälterauslauf. Dies vereinfacht die Steuerung der Transportfahrzeuge und der daran ausgebildeten Halteelemente, wie Drehteller und/oder Zentrierköpfe, zur Behandlung der Behälter am jeweiligen Behandlungsaggregat.

Vorzugsweise umfasst das Linearmotorsystem eine Steuerung, mit der die Transportfahrzeuge der oberen und unteren Umlaufbahn zur Behälterübernahme paarweise mit Transportbewegungen einzelner einlaufender Behälter synchronisiert werden können.

Beispielsweise können die Transportbewegungen der einzelnen einlaufenden Behälter stromaufwärts der Behandlungsmaschine sensorisch erkannt werden, so dass die Transportfahrzeuge mit den einlaufenden Behältern synchronisiert werden können. Zudem können Transportlücken im Einlauf, also fehlende Behälter, flexibel berücksichtigt werden.

Das heißt, die Transportfahrzeuge der oberen und unteren Umlaufbahn werden gezielt nur mit tatsächlich einlaufenden Behältern synchronisiert. Bei einlaufseitigen Transportlücken warten die Transportfahrzeuge paarweise bis zum nächsten einlaufenden Behälter. Entsprechend kann auch die Behandlung der Behälter am jeweiligen Behandlungsaggregat mit den tatsächlich einlaufenden Behältern synchronisiert werden.

Vorzugsweise umfasst die Behandlungsmaschine dann ferner individuell angetriebene Begleitfahrzeuge für die Transportfahrzeuge der unteren Umlaufbahn, wobei die Begleitfahrzeuge mittels Kugelgelenken und mittels Zahnradsegmenten oder Zahnstangen derart an die zugeordneten Drehteller gekoppelt sind, dass sich letztere bei einer Abstandsänderung zwischen Transportfahrzeug und Begleitfahrzeug drehen.

Die Kugelgelenke und die Zahnradsegmente / Zahnstangen ermöglichen ein vergleichsweise enges Zusammenfahren der Transportfahrzeuge und der daran gekoppelten Begleitfahrzeuge sowie ein gekoppeltes Befahren der vertikal gekrümmten Wendeabschnitte. Die Kugelgelenke ermöglichen eine dreidimensionale mechanische Kopplung mittels einer Verbindungsstange oder dergleichen. Zahnradsegmente lassen sich vergleichsweise platzsparend im Bereich der Drehteller zur Umlenkung einer Translation in eine Rotation zum Antrieb der Drehteller einsetzen. Zudem wird eine Übersetzung oder Untersetzung des Antriebs nach Umsetzung der Translation in die Rotation ermöglicht.

Vorzugsweise sind die Transportfahrzeuge und Begleitfahrzeuge an ihren einander zugewandten Enden so ausgebildet, dass sie ineinander eingreifend und/oder in Transportrichtung einander überlappend zusammengefahren werden können. Die Transportfahrzeuge und Begleitfahrzeuge können vorzugsweise derart zusammengefahren werden, dass beispielsweise ein oberer Fahrwerkanteil des Transportfahrzeugs mit einem unteren Fahrwerkanteil des Begleitfahrzeugs in Transportrichtung überlappt oder umgekehrt. Dadurch wird sowohl eine stabile und verschleißarme Führung der Transportfahrzeuge und Begleitfahrzeuge ermöglicht als auch eine in Transportrichtung kompakte Anordnung von Führungsrollen oder dergleichen Fahrwerkkomponenten. Ferner kann die Transportteilung der Behälter in der Behandlungsmaschine minimiert werden.

Vorzugsweise sind die Umlaufbahnen aus jeweils wenigstens drei Langstatoren modular zusammengesetzt in Form wenigstens eines Statormoduls zur Ausbildung des einseitigen Wendeabschnitts, wenigstens eines Statormoduls zur Ausbildung des auslaufseitigen Wendeabschnitts und wenigstens eines dazwischenliegenden und geradlinigen Statormoduls zur Ausbildung des Transportabschnitts. Die Behandlungsmaschine kann dann zwischen einlaufseitigen und auslaufseitigen Wendeabschnitten durch geeignete Verlängerung und/oder Verkürzung des Transportabschnitts flexibel an unterschiedliche Produktionsanforderungen angepasst werden.

Vorzugsweise umfassen die Umlaufbahnen jeweils ferner wenigstens ein horizontal und insbesondere um 90° gekrümmtes Statormodul zur Verbindung linearer Transportabschnitte und/oder Wendeabschnitte. Damit kann die Behandlungsmaschine flexibel an unterschiedliche Platzverhältnisse und/oder Aufstellungsvarianten bezüglich der Orientierung von Behältereinlauf und Behälterauslauf zueinander angepasst werden, wie beispielsweise als durchgehender Geradläufer, für einen Frontaleinlauf oder eine Winkelaufstellung. Das heißt, bei diesen Varianten ändert sich die Transportrichtung zwischen Einlauf und Auslauf entweder nicht, um 180° oder um 90°. Die Behandlungsmaschine lässt sich somit besonders flexibel an unterschiedliche Kapazitätsanforderungen und/oder Anlagensituationen anpassen.

Vorzugsweise ist wenigstens eine Behandlungsmaschine gemäß wenigstens einer der voranstehend beschriebenen Ausführungsformen vorhanden als ein Bestandteil einer Anlage zur Herstellung und/oder Behandlung von Behältern, insbesondere von Behältern aus Kunststoff und/oder für Getränke, ebenso wie eine damit stromaufwärts und/oder stromabwärts verblockte Maschine zur Herstellung und/oder Behandlung der Behälter.

Bei einem derartigen Maschinenblock ist ein bezüglich der Transportteilung flexibel anpassbarer Behältereinlauf und/oder Behälterauslauf besonders vorteilhaft, ebenso die aufgrund der modularen Bauweise möglichen Aufstellungsvarianten. Ferner kann der Transport zwischen und der Transfer zu/von einzelnen Behandlungsmaschinen und/oder weiteren damit verblockten Produktionseinheiten minimiert werden.

Bevorzugte Ausführungsformen der Erfindung sind zeichnerisch dargestellt. Es zeigen:
- Figur 1: eine schematische Teilansicht der Behandlungsmaschine von oben;
- Figur 2: eine schematische Seitenansicht des Linearmotorsystems;
- Figur 3: eine seitliche Ansicht und eine Draufsicht eines Transportfahrzeugs mit Begleitfahrzeug;
- Figur 4: eine Draufsicht auf eine alternative Ausführungsform eines Transportfahrzeugs mit einem Begleitfahrzeug; und
- Figur 5A-5C: Schematische Aufstellungsvarianten der Behandlungsmaschine.

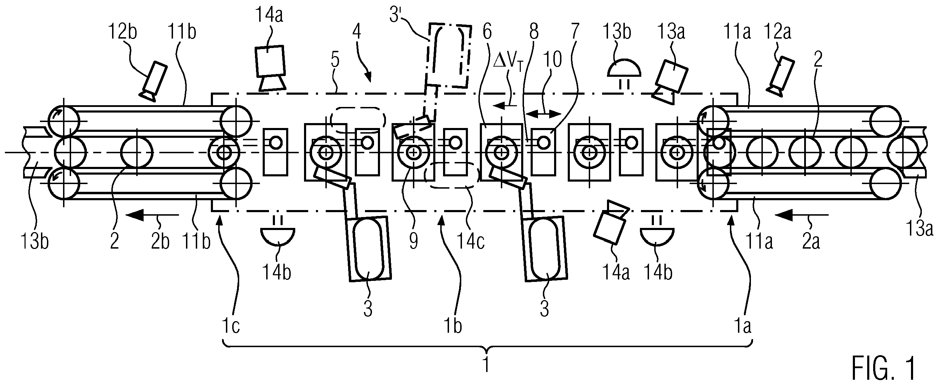

Die Figur 1 zeigt in schematischer Draufsicht den unteren Teil einer Behandlungsmaschine 1 für Behälter 2 mit beispielhaft angedeuteten Behandlungsaggregaten 3, 3' und der unteren Hälfte eines Linearmotorsystems 4 mit einem unteren Langstator 5 und davon individuell angetriebenen unteren Transportfahrzeugen 6.

Die Transportfahrzeuge 6 übernehmen die Behälter 2 an einem Behältereinlauf 1a der Behandlungsmaschine 1 und transportieren diese durch deren Behandlungsbereich 1b bis zum Behälterauslauf 1c. Die dargestellte Behandlungsmaschine 1 ist als Geradläufer mit identischer einlauf- und auslaufseitiger Transportrichtung 2a, 2b der Behälter 2 ausgebildet.

An die Transportfahrzeuge 6 sind separat individuell angetriebene Begleitfahrzeuge 7 mittels einer Koppelstange 8 dreidimensional beweglich gekoppelt, um auf den unteren Transportfahrzeugen 6 gelagerte Drehteller 9 durch Abstandsänderung 10 zwischen den unteren Transportfahrzeugen 6 und den angekoppelten Begleitfahrzeugen 7 individuell zu drehen.

Die Behandlungsaggregate 3 sind vorzugsweise, aber nicht zwingend, nur auf einer Seite des Linearmotorsystems 4 angeordnet. Ein weiteres Behandlungsaggregat 3' ist zur Veranschaulichung auf der anderen Seite des Linearmotorsystems 4 gestrichelt angedeutet.

Einlaufseitig und/oder auslaufseitig sind ferner vorhanden: seitlich an den Behältern 2 ansetzende Transportriemen 11a, 11b; Überwachungseinheiten 12a, 12b für die Behälter 2; und Lineartransporteure 13a, 13b, auf denen die Behälter 2 auf an sich bekannte Weise stehend an- und abtransportiert werden. Der Vollständigkeit halber dargestellt sind ferner optionale Kameras 14a, Beleuchtungseinheiten 14b und Bürsteneinheiten 14c.

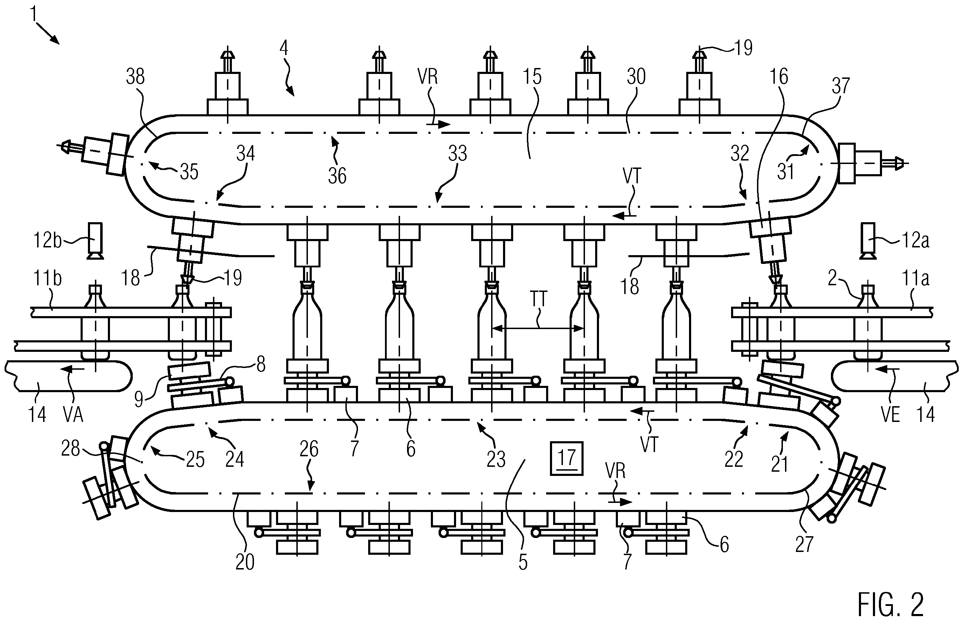

Wie die Figur 2 erkennen lässt, umfasst das Linearmotorsystem 4 ferner einen oberen Stator 15 mit davon individuell angetriebenen oberen Transportfahrzeugen 16 und eine (schematisch angedeutete) Steuerung 17. An den oberen Transportfahrzeugen 16 sind vorzugsweise mittels (schematisch angedeuteter) Steuerkurven 18 einlaufseitig auf die Behälter 2 absenkbare und auslaufseitig davon wieder abhebbare Zentrierköpfe 19 entlang ihrer Längsachse axial beweglich gelagert. Die Drehteller 9 und die Zentrierköpfe 19 dienen paarweise zum axialen Einspannen und zum individuellen Drehen der Behälter 2.

Wie die Figur 2 ferner erkennen lässt, ist der untere Langstator 5 in Form einer unteren Umlaufbahn 20 für die unteren Transportfahrzeuge 6 und die Begleitfahrzeuge 7 angeordnet. Die untere Umlaufbahn 20 umfasst vorzugsweise einen einlaufseitigen Wendeabschnitt 21 für die Transportfahrzeuge 6 und die Begleitfahrzeuge 7 und in deren Laufrichtung daran anschließend einen schräg nach oben verlaufenden Aufnahmeabschnitt 22, einen gradlinig horizontal verlaufenden Transportabschnitt 23 und einen schräg nach unten verlaufenden Abgabeabschnitt 24 für die Behälter 2 sowie einen auslaufseitigen Wendeabschnitt 25 und einen Rückführabschnitt 26 für die Transportfahrzeuge 6 und die Begleitfahrzeuge 7.

Entsprechend ist der obere Langstator 15 als obere Umlaufbahn 30 für die oberen Transportfahrzeuge 16 angeordnet, wobei die obere Umlaufbahn 30 vorzugsweise einen einlaufseitigen Wendeabschnitt 31 umfasst sowie einen schräg nach unten verlaufenden Aufnahmeabschnitt 32, einen geradlinig horizontalen Transportabschnitt 33, einen schräg nach oben verlaufenden Abgabeabschnitt 34, einen auslaufseitigen Wendeabschnitt 35 und einen Rückführabschnitt 36 für die oberen Transportfahrzeuge 16.

Die untere Umlaufbahn 20 weist an ihren Wendeabschnitten 21, 25 vertikale Bahnkrümmungen 27, 28 auf, die obere Umlaufbahn entsprechende vertikale Bahnkrümmungen 37, 38. Die vertikalen Bahnkrümmungen 27, 28, 37, 38 sind vorzugsweise, aber nicht zwingend, identisch zwecks modularer Bauweise des Linearmotorsystems 4.

Schematisch mittels Pfeil sind Transportgeschwindigkeiten VT im Bereich der Transportabschnitte 23, 33, Rückführgeschwindigkeiten VR im Bereich der Rückführabschnitte 26, 36 sowie eine Transportgeschwindigkeit VE einlaufender Behälter 2 und eine Transportgeschwindigkeit VA auslaufender Behälter 2 dargestellt.

Mit der Steuerung 17 kann die Transportgeschwindigkeit VT auf prinzipiell bekannte Weise individuell für einzelne Transportfahrzeuge 6, 16 und Begleitfahrzeuge 7 eingestellt und/oder variiert werden. Hierbei ist die Steuerung 17 derart eingerichtet, dass paarweise im Transportabschnitt 23, 33 übereinander laufende Transportfahrzeuge 6, 16 jeweils synchron mit identischer Transportgeschwindigkeit VT weiterbewegt werden.

Zur Aufnahme und/oder Abgabe der Behälter 2 lässt sich die Transportgeschwindigkeit VT einander zugeordneter Transportfahrzeuge 6, 16 vorübergehend an vorgegebene Transportgeschwindigkeiten VE, VA einlaufender und/oder auslaufender Behälter 2 anpassen.

Zusätzlich lässt sich für jedes Begleitfahrzeug 7 individuell ein Geschwindigkeitsunterschied ΔVT (siehe Figur 1) zum jeweils zugeordneten unteren Transportfahrzeug 6 einstellen und/oder variieren. Damit kann die Drehlage der einzelnen Behälter 2 mittels des nachfolgend noch genauer beschriebenen Kopplungsmechanismus für die Behandlung an dem Behandlungsaggregaten 3, 3' eingestellt und/oder variiert werden.

Die Figur 2 zeigt schematisch, dass die Umlaufbahnen 20, 30 vorzugsweise in die Wendeabschnitte 21, 25, 31, 35 integrierte oder daran anschließende Aufnahmeabschnitte 22, 32 und/oder Abgabeabschnitte 24, 34 mit schrägem Verlauf umfassen, so dass sich die vertikalen Abstände der Transportfahrzeuge 6, 16 zu den zugeordneten Behältern 2 einlaufseitig in Transportrichtung zunehmend verringern und/oder auslaufseitig zunehmend vergrößern.

Dadurch werden die an den unteren Transportfahrzeugen 6 gelagerten Drehteller 9 und/oder die an den oberen Transportfahrzeugen 16 gelagerten Zentrierköpfe 19 vergleichsweise sanft gegen die Böden und/oder Mündungsbereiche der einzuspannenden Behälter 2 geführt und auslaufseitig wieder entsprechend sanft von den behandelten Behältern 2 gelöst.

Folglich müssen die Zentrierköpfe 19 mit Hilfe der Steuerkurven 18 nur einen vergleichsweise geringen axialen Hub ausführen, um die Behälter 2 zuverlässig auf den Drehtellern 9 einzuspannen und zu zentrieren.

Bis zur vollständigen Aufnahme der Behälter 2 zwischen den Drehtellern 9 und Zentrierköpfen 19 werden die Behälter 2 seitlich von den einlaufseitigen Transportriemen 11a gehalten und zugeführt. Entsprechendes gilt für die auslaufseitigen Transportriemen 11b, die die Behälter 2 übernehmen, solange sie noch aufrecht und gegen umfallen gesichert zwischen den Drehtellern 9 und den Zentrierköpfen 19 sitzen.

Die Transportgeschwindigkeiten VE, VA der Transportriemen 11a, 11b lassen sich vorzugsweise einlaufseitig und auslaufseitig separat an die Transportgeschwindigkeiten der anschließenden Lineartransporteure 13a, 13b anpassen. Die jeweils daraus resultierende Transportgeschwindigkeit VE am Behältereinlauf 1a und VA am Behälterauslauf 1c lässt sich somit gegebenenfalls flexibel mit stromaufwärts und/oder stromabwärts vorhandenen Behandlungsanlagen synchronisieren.

Mit der Steuerung 17 kann die Transportgeschwindigkeit VT der Behälter 2 vorzugsweise für einzelne Bereiche der Behandlungsmaschine 1 separat vorgegeben werden. Dadurch lässt sich auch die Transportteilung TT der Behälter 2, also deren Abstände voneinander, auf unterschiedliche einlaufseitige, auslaufseitige und/oder behandlungsseitige Werte einstellen. Die Transportteilung TT und die Transportgeschwindigkeit VT können dann mithilfe der Transportfahrzeuge 6, 16 im Behandlungsbereich 1b auch flexibel an einzelne Behandlungsaggregate 3, 3' angepasst werden.

Das heißt, mit dem derart gesteuerten Linearmotorsystem 4 lässt sich die Transportteilung TT und/oder die individuelle Transportgeschwindigkeit VT abschnittsweise für bestimmte Behandlungsschritte optimieren. Ebenso möglich ist die Anpassung an einlaufseitige und/oder auslaufseitige Transportgeschwindigkeiten VE, VA und/oder Transportabstände.

Hierbei ist es insbesondere auch möglich, von der eingangsseitigen Überwachungseinheit 12a erkannte Transportlücken im Behälterstrom sowohl bei der Behälteraufnahme zwischen den Transportfahrzeugen 6, 16 als auch beim anschließenden Transport der Behälter 2 für die Behandlung und/oder den Auslauf und Weitertransport zu berücksichtigen. Die einander zugeordneten Transportfahrzeuge 6, 16 können gezielt mit den einlaufenden Behältern 2 synchronisiert werden und diese sowohl schonend als auch zuverlässig zwischen den Drehtellern 9 und den Zentrierköpfen 19 einspannen.

Wie aus den Figuren 1 und 2 in der schematischen Zusammenschau zu erkennen ist, sind die Wendeabschnitte 21, 25, 31, 35 mit im Wesentlichen vertikaler Bahnkrümmung 27, 28, 37, 38 ausgebildet. Im Gegensatz zu bekannten Umlaufbahnen mit horizontal gekrümmten Wendeabschnitten sind die Transportabschnitte 23, 33 und ihre zugehörigen Rückführabschnitte 26, 36 daher im Wesentlichen übereinander angeordnet.

Vorzugsweise verlaufen die einlaufseitigen Bahnkrümmungen 27, 37 und/oder die auslaufseitigen Bahnkrümmungen 28, 38 jeweils vollständig in vertikalen Ebenen, insbesondere zum einen in einer gemeinsamen einlaufseitigen Vertikalebene und zum anderen in einer gemeinsamen auslaufseitigen Vertikalebene.

Zwischen linearen Transportabschnitten 23, 33 können zusätzlich Kurvensegmente mit im Wesentlichen horizontaler Bahnkrümmung angeordnet werden, um Aufstellungsvarianten der Behandlungsmaschine 1 mit unterschiedlicher Einlaufrichtung und Auslaufrichtung zu ermöglichen. Auch wäre ein Versatz der Rückführabschnitte 26, 36 gegenüber ihren zugeordneten Transportabschnitten 23, 33 quer zur Transportrichtung prinzipiell möglich.

In jedem Fall ermöglicht die im Wesentlichen vertikale Bahnkrümmung 27, 28, 37, 38 eine platzsparende Anordnung der Langstatoren 5, 15 und der zugehörigen Umlaufbahnen 20, 30 sowie eine konstruktiv einfache und zuverlässige Behälterübergabe am Behältereinlauf 1a und am Behälterauslauf 1c der Behandlungsmaschine 1.

Zu diesem Zweck sind das Linearmotorsystem 4 und die jeweils anschließenden Transportriemen 11a, 11b in Transportrichtung vorzugsweise überlappend ausgebildet. Dadurch bleiben die Behälter 2 durchgehend in aufrechter Lage und sind gegen Umfallen gesichert. Alternativ wären anstelle der Transportriemen 11a, 11b auch Überschubbleche, seitliche Führungsgeländer und/oder dergleichen passive Führungselemente prinzipiell denkbar.

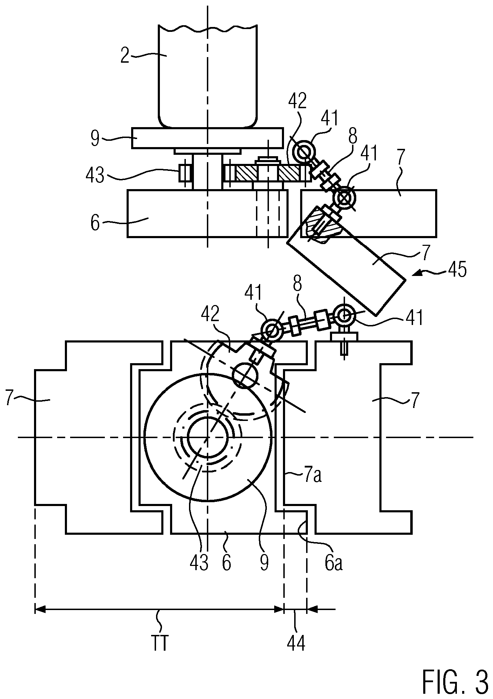

Die Figur 3 zeigt unten ein Transportfahrzeug 6 mit zwei auf minimalen Transportabstand herangefahrenen Begleitfahrzeugen 7 in schematischer Draufsicht. Das in der Figur 3 rechts dargestellte und dem Transportfahrzeug 6 nachlaufende Begleitfahrzeug 7 ist mittels der Koppelstange 8 und zwei Kugelgelenken 41 über ein Zahnradsegment 42 und ein damit kämmendes Antriebszahnrad 43 mit dem Drehteller 9 verbunden.

Folglich kann eine Translation, also eine Abstandsänderung 10 (siehe Figur 1) zwischen dem Transportfahrzeug 6 und dem daran gekoppelten Begleitfahrzeug 7, in eine Rotation des Drehtellers 9 umgesetzt werden. Hierzu gibt die Steuerung 17 eine Geschwindigkeitsdifferenz ΔVT zwischen dem Transportfahrzeug 6 und angekoppelten Begleitfahrzeug 7 vor, bis eine gewünschte Drehlage des auf dem Drehteller 9 eingespannten Behälter 2 erzielt ist.

Ein separat zu versorgender und anzusteuernder Drehantrieb für den Drehteller 9 ist daher entbehrlich. Anders gesagt, wird die Drehung des Drehtellers 9 und des darauf eingespannten Behälters 2 ebenso vom Linearmotorsystem 4 bewirkt wie der Transport der Behälter 2.

Hierbei ermöglicht die dreidimensional bewegliche Ankopplung des Begleitfahrzeugs 7 an das Transportfahrzeug 6 mittels der Kugelgelenke 41 sowohl vergleichsweise geringe Transportabstände zwischen den gekoppelten Transportfahrzeugen 6 und Begleitfahrzeugen 7 sowie deren gekoppelten Transport um die vertikalen Bahnkrümmungen 27, 28, 37, 38.

Zur optionalen Minimierung der Transportteilung TT sind die Transportfahrzeuge 6 und die Begleitfahrzeuge 7 an ihren jeweils einander zugewandten Enden 6a, 7a in Transportrichtung überlappend ausgebildet. Ein entsprechender Überlappungsbereich 44 ist in der Figur 3 beispielhaft schematisch dargestellt. Der Überlappungsbereich 44 ist dann vorzugsweise derart ausgestaltet, dass die Fahrwerke der Transportfahrzeuge 6 in Transportrichtung gesehen mit den Fahrwerken angekoppelter Begleitfahrzeuge 7 überlappen (nicht dargestellt).

Zu diesem Zweck laufen die jeweils überlappenden Fahrwerksbereiche dann übereinander an unterschiedlichen Führungsschienen (nicht dargestellt) des Langstators 5. Das heißt, im Überlappungsbereich 44 läuft eine hintere Führungsrolle des Transportfahrzeugs 6 an einer ersten, beispielsweise unteren Führungsschiene und eine vordere Führungsrolle des Begleitfahrzeugs 7 an einer zweiten, beispielsweise oberen Führungsschiene, oder umgekehrt.

In der Figur 3 ist oben in seitlicher Ansicht schematisch angedeutet, dass die Kugelgelenke 41 ein vertikales Kippen des Begleitfahrzeugs 7 bezüglich des zugeordneten Transportfahrzeugs 6 beispielsweise bis in eine beispielhaft dargestellte schräge Stellung 45 ermöglichen.

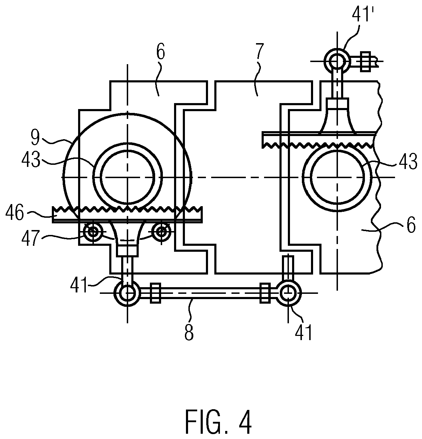

Die Figur 4 verdeutlicht schematisch eine bezüglich des Drehantriebs der Drehteller 9 mittels Begleitfahrzeug 7 funktional vergleichbare Ausführungsform. Entsprechende Bestandteile der Kopplung von unterem Transportfahrzeug 6 und Begleitfahrzeug 7 sind folglich mit den gleichen Bezugszeichen versehen wie in der Figur 3.

Demnach unterscheidet sich die Ausführungsform der Figur 4 von derjenigen der Figur 3 im Wesentlichen dadurch, dass das Zahnradsegment 42 durch eine Zahnstange 46 mit einer Linearführung 47 ersetzt ist. Auch dann ermöglicht die dreidimensional bewegliche Kopplung mittels Kugelgelenken 41 sowohl eine in Transportrichtung platzsparende Anordnung von aufeinanderfolgenden als auch ein vertikales Kippen zwischen den Transportfahrzeugen 6 und den angekoppelten Begleitfahrzeugen 7 im Bereich der vertikalen Bahnkrümmungen 27, 28, 37, 38.

Ferner ist mit einem Kugelgelenk 41' angedeutet, dass die Kopplung paarweise abwechselnd auf unterschiedlichen Seiten der Transportfahrzeuge 6 und Begleitfahrzeuge 7 angeordnet werden kann, um diese besonders eng aneinander fahren zu können.

Die Transportfahrzeuge 6, 16 und die Begleitfahrzeuge 7 umfassen auf prinzipiell bekannte Weise mit den Langstatoren 5, 15 zusammenwirkende Permanentmagnete. Damit lassen sich beispielsweise Haltekräfte von wenigstens 200 N für die Transportfahrzeuge 6, 16 und die Begleitfahrzeuge 7 erzielen.

Es ist daher nicht zwingend erforderlich, an den Transportfahrzeugen 6, 16 und/oder an den Begleitfahrzeugen 7 spezielle Führungsrollen und/oder Stützrollen anzuordnen. Jedoch können solche mechanischen Führungselemente verhindern, dass die Transportfahrzeuge 6, 16 und die Begleitfahrzeuge 7 bei einem Stromausfall von den Langstatoren 5, 15 abfallen. Hierzu können Führungsrollen, Stützrollen, Führungsschienen oder dergleichen Führungselemente des Linearmotorsystems 4 auf prinzipiell bekannte Weise angeordnet werden. Zur Sicherung der Transportfahrzeuge 6, 16 und Begleitfahrzeuge 7 wäre auch eine Notstromversorgung, beispielsweise geeignete Energiespeicher, für die Langstatoren 5, 15 denkbar.

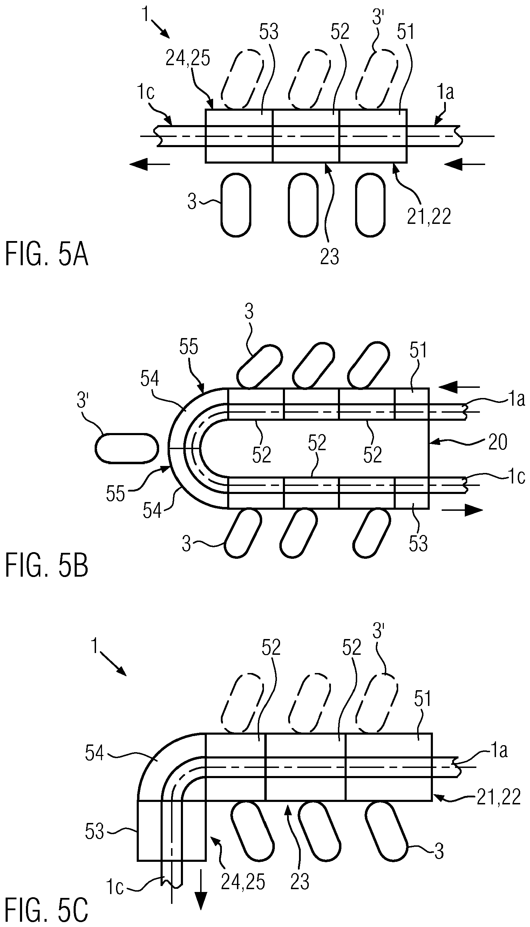

Die Figuren 5A bis 5C verdeutlichen Aufstellungsvarianten der Behandlungsmaschine 1. Demnach sind der Behältereinlauf 1a und der Behälterauslauf 1c in der Figur 5A als durchgehender Geradläufer ohne Änderung der Transportrichtung angeordnet, in der Figur 5B dagegen in Frontalaufstellung und in der Figur 5C in orthogonaler Winkelaufstellung.

Diese Aufstellungsvarianten lassen sich auf besonders ökonomische Weise dadurch realisieren, dass die Umlaufbahnen 20, 30 aus jeweils wenigstens drei Statormodulen 51 bis 54 zusammengesetzt sind. Dies ist in den Figuren 5A bis 5C stellvertretend nur für die jeweils untere Umlaufbahn 20 schematisch dargestellt.

Demnach werden der Wendeabschnitt 21 und der Aufnahmeabschnitt 22 durch ein Einlaufmodul 51 ausgebildet, der daran anschließende Transportabschnitt 23 durch ein geradliniges Transportmodul 52 und der Abgabeabschnitt 24 und der Wendeabschnitt 25 schließlich durch ein Auslaufmodul 53.

Wie die Figuren 5B und 5C erkennen lassen, kann je nach Anzahl vorhandener Behandlungsaggregate 3 und/oder der jeweiligen Aufstellungsvariante wenigstens ein weiteres geradliniges Transportmodul 52 zur Ausbildung geradliniger Transportabschnitte 23, 33 in die Umlaufbahn 20 eingesetzt werden und/oder wenigstens ein Kurvenmodul 54 mit horizontaler und insbesondere orthogonaler Krümmung zur Ausbildung gekrümmter Transportabschnitte 55 und/oder zur Änderung der Transportrichtung innerhalb der Behandlungsmaschine 1 um 90° oder 180°.

Durch diese modulare Bauweise können sowohl Aufstellungsvarianten in Frontalaufstellung, wie in der Figur 5B, flexibel konfiguriert werden als auch Varianten in Winkelaufstellung, die beispielhaft in der Figur 5C dargestellt ist.

Wie in der Figur 5B ferner anhand eines optionalen Behandlungsaggregats 3' angedeutet ist, können Behandlungsaggregate 3' prinzipiell auch im Bereich gekrümmter Transportabschnitte angeordnet werden, um den dort vorhandenen Platz zu nutzen und/oder bestimmte Behandlungsaggregate 3' lediglich temporär anzudocken.

Insbesondere bei modularer Bauweise mit den beschriebenen Statormodulen 51 bis 54 kann die Behandlungsmaschine 1 auch flexibel in einen Maschinenblock integriert werden, bei dem beispielsweise stromaufwärts und/oder stromabwärts zusätzliche Behandlungsmaschinen 1 und/oder anderweitige Einheiten zur Herstellung und/oder Behandlung von Behältern angeordnet sind.

Derartige Einheiten können beispielsweise Streckblasmaschinen sein, Füllmaschinen oder dergleichen.

Die beschriebene Behandlungsmaschine 1 ist vorzugsweise eine Etikettiermaschine, Druckmaschine oder dergleichen.

Alternativ zum beschriebenen Drehantrieb für die Drehteller 9 wären auch individuelle Servomotoren beispielsweise auf der Grundlage einer induktiven Energieversorgung prinzipiell denkbar.

Auf der Grundlage der beschriebenen vertikalen Bahnkrümmung 27, 28, 37, 38 sind Behandlungsmaschinen 1 mit besonders platzsparendem Grundriss und mit einer innerhalb der Behandlungsmaschine 1 flexibel anpassbaren Transportteilung TT für die Behälter 2 möglich.

Besonders hervorzuheben ist hierbei die Möglichkeit, sowohl am Behältereinlauf 1a und Behälterauslauf 1c als auch im Behandlungsbereich 1b mit seinem wenigstens einen Behandlungsaggregat 3 allein mittels des Linearmotorsystems 4 Transportgeschwindigkeiten VT und/oder Transportteilungen TT flexibel anzupassen. Diesbezüglich unflexible und aufwändige Einlaufsterne und Auslaufsterne sind dagegen entbehrlich.

## Patentansprüche

1. Behandlungsmaschine (1) für Behälter (2), umfassend: wenigstens ein Behandlungsaggregat (3, 3'); und ein Linearmotorsystem (4) mit Langstatoren (5, 15) und davon individuell angetriebenen Transportfahrzeugen (6, 16), wobei die Langstatoren (5, 15) in Form einer unteren und einer oberen Umlaufbahn (20, 30) für die Transportfahrzeuge (6, 16) mit einander am Behandlungsaggregat (3, 3') zugewandten, insbesondere geradlinigen Transportabschnitten (23, 33) angeordnet sind, und wobei die Transportfahrzeuge (6, 16) paarweise zum vertikalen Einspannen der Behälter (2) ausgebildet sind, wobei die Transportfahrzeuge (6) der unteren Umlaufbahn (20) Drehteller (9) zur Aufnahme der Behälter (2) umfassen und die Transportfahrzeuge (16) der oberen Umlaufbahn (30) Zentrierköpfe (19) zum axialen Einspannen der Behälter (2) auf den Drehtellern (9), **dadurch gekennzeichnet, dass** die untere und obere Umlaufbahn (20, 30) Wendeabschnitte (21, 25, 31, 35) mit im Wesentlichen vertikaler Bahnkrümmung (27, 28, 37, 38) umfassen und die Behandlungsmaschine mechanische Steuerkurven (18) umfasst zum Absenken der Zentrierköpfe (19) auf die einlaufenden Behälter (2) und zum Anheben der Zentrierköpfe (19) von den auslaufenden Behältern (2).

2. Behandlungsmaschine nach Anspruch 1, ferner mit einem an den Wendeabschnitten (21, 25, 31, 35) angeordneten Behältereinlauf (1a) und Behälterauslauf (1c).

3. Behandlungsmaschine nach Anspruch 1 oder 2, wobei das Linearmotorsystem (4) eine Steuerung (17) umfasst, mit der Transportgeschwindigkeiten (VT) paarweise übereinander laufender Transportfahrzeuge (6, 16) synchron variiert werden können.

4. Behandlungsmaschine nach Anspruch 2 und 3, wobei die Transportgeschwindigkeiten (VT) am Behältereinlauf (1a) und/oder Behälterauslauf (1c) unabhängig von den Transportgeschwindigkeiten (VT) am Behandlungsaggregat (3, 3') eingestellt werden können.

5. Behandlungsmaschine nach Anspruch 2, wobei die untere Umlaufbahn (20) am Behältereinlauf (1a) einen Aufnahmeabschnitt (22) und/oder am Behälterauslauf (1c) einen Abgabeabschnitt (24) mit einem Verlauf schräg nach unten zum jeweils anschließenden Wendeabschnitt (21, 25) hin umfasst, und/oder wobei die obere Umlaufbahn (30) am Behältereinlauf (1a) einen Aufnahmeabschnitt (32) und/oder am Behälterauslauf (1c) einen Abgabeabschnitt (34) mit einem Verlauf schräg nach oben zum jeweils anschließenden Wendeabschnitt (31, 35) hin umfasst.

6. Behandlungsmaschine nach wenigstens einem der vorigen Ansprüche, ferner mit eingangsseitig und/oder ausgangsseitig mit den Wendeabschnitten (21, 25, 31, 35) in Transportrichtung überlappenden Transportriemen (11a, 11b) zum seitlichen Halten der Behälter (2).

7. Behandlungsmaschine nach 6, wobei die Transportriemen (11a, 11b) in linearer Fortsetzung der jeweils anschließenden Transportabschnitte (23, 33) verlaufen.

8. Behandlungsmaschine nach Anspruch 3, wobei die Steuerung (17) dazu ausgebildet ist, die Transportfahrzeuge (6, 16) der unteren und oberen Umlaufbahn (20, 30) zur Behälterübernahme paarweise mit Transportbewegungen einzelner einlaufender Behälter (2) zu synchronisieren.

9. Behandlungsmaschine nach Anspruch nach wenigstens einem der vorigen Ansprüche, ferner mit individuell angetriebenen Begleitfahrzeugen (7) für die Transportfahrzeuge (6) der unteren Umlaufbahn (20), wobei die Begleitfahrzeuge (7) mittels Kugelgelenken (41) und Zahnradsegmenten (42) oder Zahnstangen (46) derart an die zugeordneten Drehteller (9) gekoppelt sind, dass sich letztere bei einer Abstandsänderung (10) zwischen Transportfahrzeug (6) und Begleitfahrzeug (7) drehen.

10. Behandlungsmaschine nach Anspruch 9, wobei die unteren Transportfahrzeuge (6) und die Begleitfahrzeuge (7) an ihren einander zugewandten Enden (6a, 7a) so ausgebildet sind, dass sie in Transportrichtung ineinander eingreifend oder einander überlappend zusammengefahren werden können.

11. Behandlungsmaschine nach wenigstens einem der vorigen Ansprüche, wobei die Umlaufbahnen (20, 30) jeweils aus wenigstens einem Statormodul (51) zur Ausbildung des einlaufseitigen Wendeabschnitts (21, 31), wenigstens eines Statormoduls (53) zur Ausbildung des auslaufseitigen Wendeabschnitts (25, 35) und wenigstens eines dazwischenliegenden und insbesondere geradlinigen Statormoduls (52) zur Ausbildung des Transportabschnitts (23, 33) zusammengesetzt sind.

12. Behandlungsmaschine nach Anspruch 11, wobei die Umlaufbahnen (20, 30) jeweils ferner wenigstens ein horizontal um insbesondere 90° gekrümmtes Statormodul (54) zur Ausbildung eines gekrümmten Transportabschnitts (55) und/oder Verbindungsabschnitts zwischen geradlinigen Transportabschnitten (23, 33) und/oder Wendeabschnitten (21, 25, 25, 35) umfassen.

13. Anlage zur Herstellung und/oder Behandlung von Behältern (2), insbesondere Behältern aus Kunststoff und/oder für Getränke, umfassend wenigstens eine Behandlungsmaschine (1) nach wenigstens einem der vorigen Ansprüche und wenigstens eine damit stromaufwärts und/oder stromabwärts verblockte Einheit zur Herstellung und/oder Behandlung der Behälter (2).

## Claims

1. Treatment machine (1) for containers (2), comprising: at least one treatment unit (3, 3'); and a linear motor system (4) with long stators (5, 15) and transport vehicles (6, 16) individually driven by them, wherein the long stators (5, 15) are arranged in the form of a lower and an upper circulating track (20, 30) for the transport vehicles (6, 16) with in particular rectilinear transport sections (23, 33) facing one another on the treatment unit (3, 3'), and wherein the transport vehicles (6, 16) are designed in pairs to vertically clamp the containers (2), wherein the transport vehicles (6) of the lower circulating track (20) comprise rotary plates (9) for receiving the containers (2), and the transport vehicles (16) of the upper circulating track (30) comprise centring heads (19) for axially clamping the containers (2) to the rotary plates (9), **characterised in that** the lower and upper circulating tracks (20, 30) comprise turning sections (21, 25, 31, 35) with a substantially vertical track curvature (27, 28, 37, 38) and the treatment machine comprises mechanical control cams (18) for lowering the centring heads (19) onto the incoming containers (2) and for lifting the centring heads (19) off the outgoing containers (2).

2. Treatment machine according to Claim 1, further having a container inlet (1a) and a container outlet (1c) arranged on the turning sections (21, 25, 31, 35).

3. Treatment machine according to Claims 1 or 2, wherein the linear motor system (4) comprises a controller (17), by means of which transport speeds (VT) of transport vehicles (6, 16) running one above the other in pairs can be varied synchronously.

4. Treatment machine according to Claims 2 and 3, wherein the transport speeds (VT) at the container inlet (1a) and/or container outlet (1c) can be adjusted independently of the transport speeds (VT) at the treatment unit (3, 3').

5. Treatment machine according to Claim 2, wherein the lower circulating track (20) comprises a receiving section (22) at the container inlet (1a) and/or a discharge section (24) at the container outlet (1c) with a profile running obliquely downwards toward the respective adjoining turning section (21, 25), and/or wherein the upper circulating track (30) comprises a receiving section (32) at the container inlet (1a) and/or a discharge section (34) at the container outlet (1c) with a profile running obliquely upwards toward the respective adjoining turning section (31, 35).

6. Treatment machine according to at least one of the preceding claims, further having transport belts (11a, 11b), for laterally holding the containers (2), overlapping the turning sections (21, 25, 31, 35) in the transport direction on the input side and/or on the output side.

7. Treatment machine according to 6, wherein the transport belts (11a, 11b) run in a linear continuation of the respective adjoining transport sections (23, 33).

8. Treatment machine according to Claim 3, wherein the controller (17) is designed to synchronize the transport vehicles (6, 16) of the lower and upper circulating tracks (20, 30) in pairs with transport movements of individual incoming containers (2) for container transfer.

9. Treatment machine according to claim according to at least one of the preceding claims, further having individually driven accompanying vehicles (7) for the transport vehicles (6) of the lower circulating track (20), wherein the accompanying vehicles (7) are coupled to the associated rotary plates (9) by means of ball joints (41) and gear segments (42) or toothed racks (46) such that the latter rotate between the transport vehicle (6) and the accompanying vehicle (7) during a change in distance (10).

10. Treatment machine according to Claim 9, wherein the lower transport vehicles (6) and the accompanying vehicles (7) are designed at their ends (6a, 7a) that face each other such that they can be moved together in the transport direction in engagement with one another or overlapping one another.

11. Treatment machine according to at least one of the preceding claims, wherein the circulating tracks (20, 30) are each composed of at least one stator module (51) for forming the inlet-side turning section (21, 31), at least one stator module (53) for forming the outlet-side turning section (25, 35) and at least one intermediate and in particular rectilinear stator module (52) for forming the transport section (23, 33).

12. Treatment machine according to Claim 11, wherein the circulating tracks (20, 30) each further comprise at least one stator module (54), which is curved horizontally by in particular 90°, for forming a curved transport section (55) and/or connecting section between rectilinear transport sections (23, 33) and/or turning sections (21, 25, 25, 35).

13. Installation for producing and/or treating containers (2), in particular containers made of plastic and/or for beverages, comprising at least one treatment machine (1) according to at least one of the preceding claims and at least one unit, which is locked in upstream and/or downstream thereof, for producing and/or treating the containers (2).

## Revendications

1. Machine de traitement (1) pour des récipients (2), comprenant : au moins une unité de traitement (3, 3') ; et un système de moteur linéaire (4) avec des stators longitudinaux (5, 15) et des véhicules de transport (6, 16) entraînés individuellement par ceux-ci, dans laquelle les stators longitudinaux (5, 15) sont agencés sous la forme de trajets de circulation inférieur et supérieur (20, 30) pour les véhicules de transport (6, 16) avec des sections de transport (23, 33) orientées l'une vers l'autre sur l'agrégat de traitement (3, 3'), en particulier rectilignes, et dans laquelle les véhicules de transport (6, 16) sont conçus par paires pour serrer verticalement les récipients (2), dans laquelle les véhicules de transport (6) du trajet de circulation inférieur (20) comprennent des plateaux rotatifs (9) pour recevoir les récipients (2) et les véhicules de transport (16) du trajet de circulation supérieur (30) comprennent des têtes de centrage (19) pour serrer axialement les récipients (2) sur les plaques rotatives (9), **caractérisée en ce que** les trajets de circulation inférieur et supérieur (20, 30) comprennent des sections de retournement (21, 25, 31, 35) à courbure de trajet sensiblement verticale (27, 28, 37, 38) et la machine de traitement comprend des cames mécaniques (18) pour abaisser les têtes de centrage (19) sur les récipients (2) entrants et pour soulever les têtes de centrage (19) à partir des récipients (2) sortants.

2. Machine de traitement selon la revendication 1, comprenant en outre une entrée de récipient (1a) et une sortie de récipient (1c) agencées au niveau des sections de retournement (21, 25, 31, 35).

3. Machine de traitement selon la revendication 1 ou 2, dans laquelle le système de moteur linéaire (4) comprend un dispositif de commande (17) avec lequel des vitesses de transport (VT) de véhicules de transport (6, 16) superposés par paires peuvent être modifiées de manière synchrone.

4. Machine de traitement selon les revendications 2 et 3, dans laquelle les vitesses de transport (VT) à l'entrée du récipient (1a) et/ou à la sortie du récipient (1c) peuvent être ajustées indépendamment des vitesses de transport (VT) au niveau de l'unité de traitement (3, 3').

5. Machine de traitement selon la revendication 2, dans laquelle le trajet de circulation inférieur (20) comprend une section de réception (22) au niveau de l'entrée de récipient (1a) et/ou une section de distribution (24) au niveau de la sortie de récipient (1c) avec un tracé incliné vers le bas vers la section de retournement respective suivante (21, 25), et/ou dans laquelle le trajet de circulation supérieur (30) comprend une section de réception (32) au niveau de l'entrée de récipient (1a) et/ou une section de distribution (34) au niveau de la sortie de récipient (1c) avec un tracé incliné vers le haut vers la section de retournement respective suivante (31, 35).

6. Machine de traitement selon au moins l'une quelconque des revendications précédentes, comprenant en outre des courroies de transport (11a, 11b) qui se chevauchent dans la direction de transport du côté de l'entrée et/ou du côté de la sortie avec les sections de retournement (21, 25, 31, 35) pour maintenir latéralement les récipients (2).

7. Machine de traitement selon la revendication 6, dans laquelle les courroies de transport (11a, 11b) s'étendent dans la continuité linéaire des sections de transport (23, 33) respectivement adjacentes.

8. Machine de traitement selon la revendication 3, dans laquelle le dispositif de commande (17) est conçu pour synchroniser les véhicules de transport (6, 16) des trajets de circulation inférieur et supérieur (20, 30) pour le transport de récipients par paires avec des déplacements de transport de récipients (2) entrants.

9. Machine de traitement selon au moins l'une quelconque des revendications précédentes, comprenant en outre des véhicules d'accompagnement (7) entraînés individuellement pour les véhicules de transport (6) du trajet inférieur (20), dans laquelle les véhicules d'accompagnement (7) sont couplés aux plaques rotatives associées (9) au moyen de joints à rotule (41) et de segments de roue dentée (42) ou de crémaillères (46) de telle sorte que ces derniers tournent lors d'un changement de distance (10) entre le véhicule de transport (6) et le véhicule d'accompagnement (7).

10. Machine de traitement selon la revendication 9, dans laquelle les véhicules de transport inférieurs (6) et les véhicules d'accompagnement (7) sont configurés à leurs extrémités tournées l'une vers l'autre (6a, 7a) de telle sorte qu'ils peuvent être amenés à venir en prise l'un dans l'autre dans la direction de transport ou à se chevaucher l'un l'autre.

11. Machine de traitement selon au moins l'une quelconque des revendications précédentes, dans laquelle les trajets de circulation (20, 30) sont composés chacun d'au moins un module de stator (51) pour la formation de la section de retournement côté entrée (21, 31), d'au moins un module de stator (53) pour la formation de la section de retournement côté sortie (25, 35) et d'au moins un module de stator (52) intermédiaire et en particulier rectiligne pour la formation de la section de transport (23, 33).

12. Machine de traitement selon la revendication 11, dans laquelle les trajets de circulation (20, 30) comprennent en outre chacun au moins un module de stator (54) horizontal incurvé en particulier de 90° pour former une section de transport incurvée (55) et/ou une section de liaison entre des sections de transport rectilignes (23, 33) et/ou des sections de retournement (21, 25, 25, 35).

13. Installation pour la fabrication et/ou le traitement de récipients (2), en particulier de récipients en matière plastique et/ou destinés à des boissons, comprenant au moins une machine de traitement (1) selon au moins l'une quelconque des revendications précédentes et au moins une unité bloquée avec celle-ci en amont et/ou en aval pour la fabrication et/ou le traitement des récipients (2).
